# EUROPÄISCHE PATENTSCHRIFT

(11) **EP 1 496 334 B1**
(45) Veröffentlichungstag und Bekanntmachung des Hinweises auf die Patenterteilung: **23.11.2005**
(21) Anmeldenummer: 04015727.3
(22) Anmeldetag: 03.07.2004
(51) Int. Cl.: G01B 5/00, F16M 11/04

(54) **Messpunkt-Bolzen**
Measuring point bolt
Boulon pour un point de mesure

(30) Priorität: 09.07.2003 DE 20310503 U
(43) Veröffentlichungstag der Anmeldung: 12.01.2005
(73) Patentinhaber: Schwarz Verbindungs-Systeme GmbH, 75382 Althengstett (DE)
(72) Erfinder: Schwarz, Helmut, 71263 Weil der Stadt (DE); Homner, Bernhard, 75365 Calw (DE)
(74) Vertreter: Blutke, Klaus Wilhelm

(56) Entgegenhaltungen:
- DE-B- 2 530 662
- PATENT ABSTRACTS OF JAPAN Bd. 0080, Nr. 47 (M-280), 2. März 1984 (1984-03-02) -& JP 58 202742 A (NISSAN JIDOSHA KK), 26. November 1983 (1983-11-26)

## Beschreibung

Die Erfindung bezieht sich auf einen Meßpunkt-Bolzen zum vorübergehenden Anbringen von Meßeinrichtungen an beiden Bolzenenden.
Die Maßgenauigkeit von bestimmten Gegenständen, z.B. Flugzeugen wird während und nach der Montage, sowie nach einer bestimmten Anzahl von Betriebsstunden oder nach außergewöhnlichen Belastungen überprüft.
Hierfür sind z.B. an Flugzeugen bestimmte Meßpunkte eingerichtet, von denen aus mittels Meßeinrichtungen die Überprüfung auf Maßgenauigkeit vorgenommen wird.

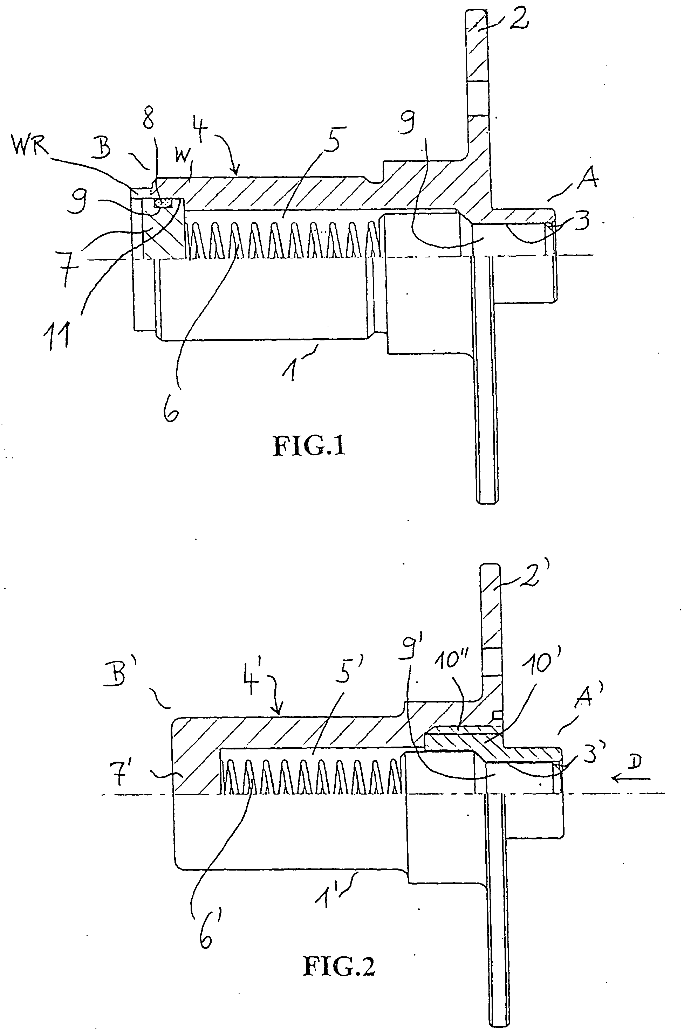

Ein solcher Meßpunkt stellt sich als ein mit der Flugzeugwandung fest verbundener Meßpunkt-Bolzen mit 2 freien Bolzen-Enden beidseits der Wandung dar. An diesen Bolzenenden werden bei Bedarf die Meßeinrichtungen vorübergehend angeordnet.
Bisher wurden ( z.B. nach der AIRBUS- Norm NSA9501) Meßpunkt-Bolzen folgenden Aufbaus verwendet ( FIG.2):
Der Meßpunkt-Bolzen 1' weist einen Flansch 2' auf, welcher seiner (1') Befestigung an der Flugzeugwand dient. In Bolzen-Achsenrichtung ist eine Innen-Bohrung 5' zur Aufnahme einer Spiral-Druckfeder 6' angeordnet. Im Bolzenende A' ist ein Gewindeeinsatz 10' angeordnet, welcher für die Druckfeder 6' einen Anschlag bildet und welcher eine Steckstift-Aufnahme-Bohrung 3' zur Aufnahme eines mit einer ersten Meßeinrichtung verbundenen Steck-Stiftes aufweist.
Beim Einführen dieses Steck-Stiftes in die Steck-Stift-Aufnahme-Bohrung 3' wird ein in dieser verschieblich angeordnetes Element 9', welches mit der Druckfeder verbunden ist und das Eindringen von unerwünschten Fremdkörpern verhindern soll, gegen die Kraft der Druckfeder in Richtung D gedrückt.
Beim Entfernen des Steck-Stiftes aus der Innenbohrung 3' schiebt die Druckfeder 7' dieses Element wieder in Richtung der Öffnung der Innenbohrung 3'.

Das andere Bolzenende B' weist einen zylindrischen Außenschaftbereich 4' auf, auf den ein mit einer zweiten Meßeinrichtung verbundener Hohlbolzen aufsteckbar ist.

Dank des geschlossenen in die Bolzenwandung übergehenden Bolzen-Bodens 7' kann ( bei in die Flugzugwandung eingebauten Meßpunkt-Bolzen) kein Luftdruckausgleich zwischen der Innenbohrung 5' und dem außerhalb des Bolzen-Endes B' liegenden Bereich (links der gedachten Flugzeugwandung) erfolgen.

An die Meßpunkt-Bolzen werden immer höhrere Toleranzanforderungen gestellt, denen der vorbekannte Meßpunkt-Bolzen durch den relativ "ungenau" in das Bolzen-Ende A' eingebrachten Gewindeeinsatz 10' (mit dem Gewinde-Schraubbereich 10' ') nicht mehr genügen kann.

Es ist deshalb Aufgabe der Erfindung, den bereits bekannten Meßpunkt-Bolzen dahingehend zu verbessern, daß er den erhöhten Toleranzanforderungen genügt.

Diese Aufgabe der Erfindung wird durch die im kennzeichnenden Merkmale des Anspruch 1 gelöst.

Dabei wird auf den "ungenauen" Gewindeeinsatz verzichtet zugunsten einer direkt in das gedachte "volle" Material am Bolzenende A ( FIG.1) eingebrachten genauen Steckstift-Aufnahme-Bohrung, die höchsten Toleranzanforderungen genügt. Vom anderen Bolzenende B' her wird (bis zur Verbindung mit der Steckstift-Aufnahme-Bohrung 3) die Innenbohrung 5 zur Aufnahme der Druckfeder 6 mit dem in der Steckstift-Aufnahme-Bohrung 3 verschieblichen Element 9 zum Fernhalten unerwünschter Fremdkörper vorgesehen.
Anschließend wird die Öffnung der Innenbohrung 5 am Bolzenende B durch einen Verschluß-Boden 7 fest verschlossen. Diese feste Verbindung muß gegbenenfalls garantieren, daß über sie kein Luftdruckausgleich erfolgen kann.

Vorteilhafte Weiterbildungen der Erfindung sind in den Unteransprüchen gekennzeichnet.

Ein Ausführungsbeispiel der Erfindung ist in den Zeichnungen dargestellt und wird im folgenden näher beschrieben. Es zeigen:
FIG. 1
   eine Teil-Schnittansicht des erfindungsgemäßen Meßpunkt-Bolzens;
FIG. 2
   eine Teil-Schnittansicht eines Meßpunkt-Bolzens nach dem Stand der Technik. '

FIG. 1 zeigt
eine Teil-Schnittansicht des erfindungsgemäßen Meßpunkt-Bolzens 1. Dieser weist einen Befestigungsflansch 2 für seine Befestigung an einer Wandung (z.B. einer Flugzeugwandung) auf. Die beidseits der Wandung angeordeneten Bolzen-Enden A und B dienen dem Anbringen ein- bzw. aufsteckbarer Meßeinrichtungen. Hierzu ist am ersten Bolzenende A eine in axialer Bolzenrichtung verlaufende Steckstift-Aufnahme-Bohrung 3 angeordnet, in welche ein mit einer ersten Meßeinrichtiung verbundener Steckstift einsteckbar ist; das zweiten Bolzenende B weist einen äußeren Zylinderbereich 4 auf, auf den in axialer Bolzenrichtung ein mit einer zweiten Meßeinrichtung verbundener Hohlstift aufsteckbar ist.

Der Meßpunkt-Bolzen 1 hat eine axiale mit der Steckstift-Aufnahme-Bohrung 3 verbundene Innenbohrung 5, in welcher die Druckfeder 6 mit einem in der Steckstift-Aufnahme-Bohrung 3 verschieblichen Element 9 angeordnet ist, welches das Eindringen unerwünschter Fremdkörper verhindern soll.

Die Steckstift-Aufnahme-Bohrung 3 ist direkt in das gedachte volle Bolzenmaterial am ersten Bolzen-Ende A gebohrt. Diese Bohrung kann mit höchsten Toleranzanforderungen eingebracht werden.
Die Innenbohrung 5 mit der darin angeordneten Druckfeder ist zum zweiten Bolzen-Ende B hin durch einen Verschluß-Boden 7 abgeschlossen.
Der Verschluß-Boden 7 ist in einer konzentrischen Aussparung 11 im Inneren des Bolzenendes B angeordnet
und zum Bolzenende B hin an oder mit über ihn hinausstehenden Teilen WR der Bolzenwandung W fest fixiert bzw. verbunden, z.B. durch Verkleben bzw. Verbördeln oder Verstemmen.
Zwischen der Bolzenwandung (W) und dem Verschluß-Boden (7) ist ein Dichtungsring (8) aus elastischem Material angeordnet; seine Lage ist durch die periphere Nut 9 im Verschluß-Boden bestimmt.

## Patentansprüche

1. An einer Wandung befestigbarer Meßpunkt-Bolzen , an dessen beiden Bolzenenden beidseits der Wandung jeweils eine Meßanordnung angeordnet werden kann,
wobei
am ersten Bolzenende (A) eine in axialer Bolzenrichtung verlaufende Steckstift-Aufnahme-Bohrung (3) angeordnet ist, in welche ein mit einer ersten Meßeinrichtiung verbundener Steckstift einsteckbar ist und
wobei
das zweiten Bolzenende (8) einen äußeren Zylinderbereich aufweist, auf den in axialer Bolzenrichtung ein mit einer zweiten Meßeinrichtung verbundener Hohlstift aufsteckbar ist, und
wobei
der Bolzen eine axiale mit der Steckstift-Aufnahme-Bohrung (3) verbundene Innenbohrung (5) aufweist, in welcher eine Druckfeder (6) mit einem in der Steckstift-Aufnahme-Bohrung (3) verschieblichen das Eindringen von Fremdkörpern verhindernden Elemente (9) angeordnet ist,
**dadurch gekennzeichnet, daß** die Steckstift-Aufnahme-Bohrung (3) direkt in das gedachte volle Bolzenmaterial am ersten Bolzen-Ende (A) gebohrt ist und
daß die Innenbohrung (5) im Bereich des zweiten Bolzenendes (B) durch einen - einen Luftdruck-Ausgleich verhindernden - fest mit der Bolzenwandung (W) verbundenen Verschluß-Boden (7) abgeschlossen ist.

2. Anordnung nach Anspruch 1,
**dadurch gekennzeichnet, daß**
der Verschlußboden (7) in einer konzentrischen Aussparung (11) im Inneren des Bolzenendes (B) angeordnet und zum Bolzenende (B) hin an oder mit über ihn hinausstehenden Teilen ( WR) der Bolzenwandung (W) fest verbunden ist.

3. Anordnung nach Anspruch 2,
**dadurch gekennzeichnet, daß**
zwischen der Bolzenwandung (W) und dem Verschluß-Boden (7) ein Dichtungsring (8) aus elastischem Material angeordnet ist.

## Claims

1. A measuring-point bolt affixable to a wall, on both ends of which on either side of the wall, a measuring device can be arranged, where
a bore (3) for a guide-pin running in axial direction of the bolt is arranged at the first end of the bolt (A), into which a guide pin attached to a first measuring device can be inserted, and where
the second end of the bolt (8) has an outer cylinder area, onto which a hollow pin, connected to a second measuring device, can be pushed in axial direction of the bolt, and where
the bolt has an axial interior bore (5) connected with the bore (3) for the guide pin, in which a pressure spring (6) is located, with an element (9) for preventing entry of foreign material, which moves in the bore (3) for the guide pin,
**characterised in that**
the bore (3) for receiving the guide pin is drilled directly in the imaginary solid bolt material at the first end (A) of the bolt, and
that the interior bore (5) is closed in the area of the second end of the bolt by a sealing base (7) for preventing air-pressure compensation, which is connected permanently with the bolt wall (W).

2. Arrangement according to claim 1,
**characterised in that**
the sealing base (7) is permanently connected to the bolt wall (W) or permanently connected to parts (WR) of the bolt wall (W) projecting over it.

3. Arrangement according to claim 2,
**characterised in that**
a sealing ring (8) of elastic material is located between the wall of the bolt (W) and the sealing base (7).

## Revendications

1. Boulon pour point de mesure pouvant être fixé sur une paroi, dont les deux extrémités peuvent recevoir, des deux côtés de la cloison, chacune un dispositif de mesure,
la première extrémité du boulon (A) possédant un alésage servant de réceptacle de goupille (3) orienté dans le sens axial du boulon, dans lequel une goupille reliée à un premier dispositif de mesure peut être insérée, et
la seconde extrémité du boulon (B) possédant une partie extérieure cylindrique sur laquelle une cheville creuse reliée à un second dispositif de mesure peut être emboîtée dans le sens axial du boulon, et
le boulon possédant un alésage intérieur (5) relié à l'alésage servant de réceptacle de goupille (3), dans lequel est disposé un ressort de compression (6) avec un élément (9) mobile dans l'alésage servant de réceptacle de goupille (3) et empêchant la pénétration de corps étrangers,
**caractérisé en ce que** l'alésage servant de réceptacle de goupille (3) est percé directement dans le matériau plein imaginaire à la première extrémité du boulon (A) et
**en ce que** l'alésage intérieur (5) est fermé au niveau de la seconde extrémité de boulon (B) par un fond d'obturation (7) fixé à la paroi du boulon (W) et empêchant un équilibrage de la pression d'air.

2. Dispositif selon la revendication 1, **caractérisé en ce que** le fond d'obturation (7) est disposé dans un évidement concentrique (11) à l'intérieur de l'extrémité du boulon (B) et fixé vers l'extrémité du boulon (B) sur ou avec des éléments (WR) de la paroi du boulon (W) qui le dépassent.

3. Dispositif selon la revendication 2, **caractérisé en ce qu'**un joint d'étanchéité (8) en matériau élastique est disposé entre la paroi du boulon (W) et le fond d'obturation (7).
